# FASCICULE DE BREVET EUROPEEN

(11) **EP 1 742 069 B1**
(45) Date de publication et mention de la délivrance du brevet: **02.09.2015**
(21) Numéro de dépôt: 06291012.0
(22) Date de dépôt: 21.06.2006
(51) Int. Cl.: G01P 15/09, G01P 15/097, G01P 15/10

(54) **Capteur inertiel a courant perturbateur reduit par reduction de la largeur et de l'ecartement des pistes dans les zones critiques**
INERTIALER SENSOR MIT REDUZIERTEN STÖRSTRÖMEN DURCH REDUKTION VON BREITE UND ABSTAND DER LEITERBAHNEN IN KRITISCHEN ZONEN
INERTIAL SENSOR WITH REDUCED ERROR CURRENTS DUE TO REDUCED WIDTH AND DISTANCE OF CONDUCTORS IN CRITICAL ZONES

(30) Priorité: 04.07.2005 FR 0507070
(43) Date de publication de la demande: 10.01.2007
(73) Titulaire: SAGEM DEFENSE SECURITE, 92100 Boulogne Billancourt (FR)
(72) Inventeur: Brisson, Raphaël, 92600 Asnieres sur Seine (FR); Featonby, Paul, Newcastle-upon-tyne NE2 3RA (GB)
(74) Mandataire: Fruchard, Guy

(56) Documents cités:
- EP-A- 1 353 185
- EP-A- 1 450 164
- FR-A- 2 454 614
- FR-A- 2 842 914
- US-B2- 6 386 035

## Description

La présente invention concerne un capteur inertiel piézo-électrique.

### ARRIERE PLAN DE L'INVENTION

On connaît, notamment du document FR-A-2 842 914, des capteurs inertiels réalisés à partir d'une plaque de quartz piézo-électrique dans laquelle sont délimités par gravure, un organe support, un cadre de découplage relié à l'organe support, et un organe vibrant relié à une masse associée au cadre de découplage, l'organe vibrant portant des électrodes d'excitation reliées à un circuit d'excitation comportant des pistes conductrices portées par la plaque piézo-électrique.

Le circuit d'excitation est alimenté avec un courant alternatif provoquant, par un effet piézo-électrique, la mise en vibration de l'organe vibrant selon une fréquence propre de vibration de cet élément vibrant. Lorsque le capteur est soumis à une accélération, la masse exerce sur l'élément vibrant une force qui modifie la fréquence de vibration de telle manière que la variation de la fréquence de vibration de l'élément vibrant permet de déterminer l'accélération à laquelle le capteur est soumis.

La modification de la fréquence de vibration est mesurée par la mesure d'un courant dans le circuit d'excitation.

On a toutefois constaté que lorsque le capteur est soumis à une accélération définie, le courant mesuré ne correspond pas de façon exacte à la variation de la fréquence de vibration de l'élément vibrant, le courant recueilli comportant un courant perturbateur s'ajoutant au courant utile d'une façon perturbant l'information utile et pouvant aller jusqu'à provoquer une saturation de l'électronique de mise en oeuvre du capteur et donc un dysfonctionnement de l'accéléromètre.

### OBJET DE L'INVENTION

Un but de l'invention est de minimiser le courant perturbateur se superposant au courant utile.

### RESUME DE L'INVENTION

Selon une constatation qui fait partie de l'invention, il a été analysé que le courant perturbateur est en majeure partie généré par des portions perturbatrices du circuit d'excitation dans lesquelles deux pistes conductrices s'étendent l'une à côté de l'autre de part et d'autre d'un plan médian d'une partie de plaque subissant des déformations lorsque le capteur est soumis à une accélération. Il a en effet été constaté que des charges de signes opposés apparaissent alors de part et d'autre du plan médian et sont recueillies par la piste conductrice la plus proche de sorte que ces charges génèrent un courant perturbateur qui est d'autant plus fort que les pistes conductrices sont plus proches des bords de la partie de plaque correspondante. Typiquement, dans les capteurs existants, les pistes conductrices ont une largeur de 50 µm et sont espacées d'une distance de 100 µm.

Selon l'invention, on prévoit dans les portions de circuit perturbatrices, des pistes conductrices ayant une largeur inférieure à 50 µm, et de préférence une largeur comprise entre 5 µm et 20 µm, les pistes conductrices étant espacées d'une distance inférieure à 100 µm, et de préférence une distance comprise entre 10 µm et 50 µm. Il a été constaté qu'une largeur des pistes conductrices inférieure à 5 µm risque de provoquer des perturbations dans la conduction des pistes et une distance inférieure à 10 µm risque de provoquer des effets capacitifs parasites diminuant les effets bénéfiques obtenus par la réduction du courant perturbateur.

### BREVE DESCRIPTION DES DESSINS

D'autres caractéristiques et avantages de l'invention apparaîtront à la lecture de la description qui suit d'un mode de réalisation particulier non limitatif de l'invention, en relation avec les figures ci-jointes parmi lesquelles :

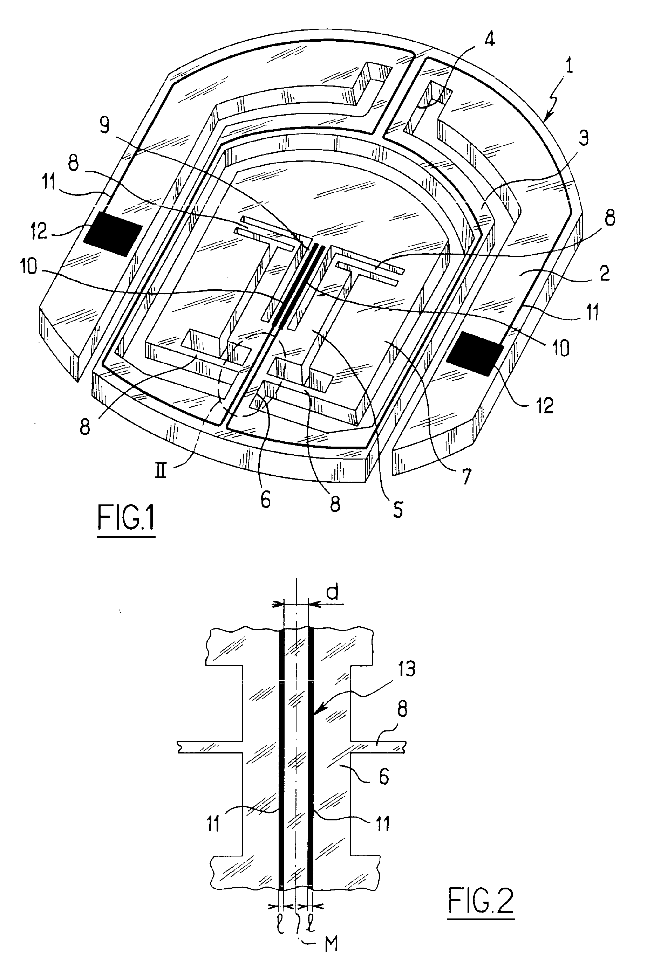

- la figure 1 est une vue en perspective agrandie d'un mode de réalisation préféré du capteur inertiel selon l'invention,
- la figure 2 est une vue de dessus partielle encore agrandie d'une de la zone II de la figure 1.

### DESCRIPTION DETAILLEE DE L'INVENTION

En référence aux figures, le capteur selon l'invention comporte de façon connue en soi du document précité une plaque en quartz piézo-électrique 1 dans laquelle sont délimités : un organe support 2 destiné à être fixé dans un boîtier, un cadre de découplage 3 ayant un côté relié à l'organe support 2 par un pontet 4, et un côté opposé relié à une première masse 5 par un pontet 6, une seconde masse 7 reliée à la première masse 5 et au pontet 6 par des éléments de liaison 8, et un élément vibrant 9 ayant des extrémités solidaires des masses 5 et 7, tous ces éléments étant obtenus par gravure de la plaque piézo-électrique 1.

De façon également connue en soi, l'organe vibrant 9 porte deux électrodes d'excitation 10 reliées à un circuit d'excitation comportant deux pistes conductrices 11 reliées à des bornes d'alimentation et de mesure 12. Au niveau des pontets 4 et 6, lesquels subissent des déformations lorsque le capteur est soumis à une accélération, le circuit d'excitation comporte des portions de circuit 13 dans lesquelles les pistes conductrices 11 s'étendent l'une à côté de l'autre de part et d'autre d'un plan médian M des pontets.

Ainsi qu'il a été indiqué ci-dessus, il a été constaté selon l'invention que la structure de ces portions de circuit est génératrice d'un courant perturbateur.

Selon l'invention, dans les portions de circuit perturbatrices 13, les pistes conductrices 11 ont une largeur l inférieure à 50 µm, et de préférence une largeur de 10 µm ou à tout le moins une largeur comprise entre 5 µm et 20 µm, et sont espacées d'une distance inférieure à 100 µm, de préférence une distance égale à 40 µm et à tout le moins une distance comprise entre 10 µm et 50 µm.

Bien entendu, l'invention n'est pan limitée au mode de réalisation décrit et on peut y apporter des variantes de réalisation sans sortir du cadre de l'invention tel que défini par les revendications.

En particulier, l'invention s'applique à tout capteur dont le circuit d'excitation comporte une portion de circuit perturbatrice dans laquelle deux pistes conductrices s'étendent l'une à côté de l'autre de part et d'autre d'un plan médian d'une partie de la plaque subissant des déformations lorsque le capteur est soumis à une accélération, quelle que soit par ailleurs la structure du capteur. A titre d'exemple non limitatif la masse 5 peut être totalement intégrée au cadre de découplage 3 de sorte que le capteur comporte alors une seule portion de circuit perturbatrice (sur le pontet 4). Le capteur peut également comporter une première masse 5 directement reliée à l'organe support. Comme dans le cas précédent, le capteur comporte alors une seule portion de circuit perturbatrice. A l'inverse le capteur peut comporter plusieurs éléments associés en cascade, multipliant le nombre de portions de circuit perturbatrices.

## Revendications

1. Capteur inertiel comportant une plaque piézo-électrique (1) dans laquelle est délimité un organe vibrant (9) portant des électrodes d'excitation (10) reliées à un circuit d'excitation comportant des pistes conductrices (11) portées par la plaque piézo-électrique, le circuit d'excitation comportant une portion de circuit perturbatrice (13) dans laquelle deux pistes conductrices (11) s'étendent l'une à côté de l'autre de part et d'autre d'un plan médian d'une partie (4, 6) de la plaque subissant des déformations lorsque le capteur est soumis à une accélération, **caractérisé en ce que** dans la portion de circuit perturbatrice (13) les pistes conductrices (11) ont une largeur (l) inférieure à 50 µm.

2. Capteur selon la revendication 1, **caractérisé en ce que** dans la portion de circuit perturbatrice (13) les pistes conductrices (11) ont une largeur (l) comprise entre 5 µm et 20 µm.

3. Capteur selon la revendication 1, **caractérisé en ce que** dans la portion de circuit perturbatrice (13) les pistes conductrices (11) ont une largeur (l) de 10 µm.

4. Capteur selon la revendication 1, **caractérisé en ce que** dans la portion de circuit perturbatrice (13), les pistes conductrices sont espacées d'une distance (d) inférieure à 100 µm.

5. Capteur selon la revendication 4, **caractérisé en ce que** dans la portion de circuit perturbatrice (13), les pistes sont espacées d'une distance (d) comprise entre 10 µm et 50 µm.

6. Capteur selon la revendication 5, **caractérisé en ce que** dans la portion de circuit perturbatrice (13), les pistes sont espacées d'une distance (d) égale à 40 µm.

## Patentansprüche

1. Inertialsensor, umfassend eine piezoelektrische Scheibe (1), in der ein Schwingelement (9) begrenzt ist, das Anregungselektroden (10) trägt, die mit einem Anregungskreis verbunden sind, der Leiterbahnen (11) umfasst, die von der piezoelektrischen Scheibe getragen werden, wobei der Anregungskreis einen Störkreisabschnitt (13) umfasst, in dem sich zwei Leiterbahnen (11) nebeneinander zu beiden Seiten einer Mittelebene eines Abschnitts (4, 6) der Scheibe erstrecken, der Verformungen erfährt, wenn der Sensor einer Beschleunigung unterzogen wird, **dadurch gekennzeichnet, dass** in dem Störkreisabschnitt (13) die Leiterbahnen (11) eine Breite (I) haben, die kleiner 50 µm ist.

2. Sensor nach Anspruch 1, **dadurch gekennzeichnet, dass** in dem Störkreisabschnitt (13) die Leiterbahnen (11) eine Breite (I) zwischen 5 µm und 20µm haben.

3. Sensor nach Anspruch 1, **dadurch gekennzeichnet, dass** in dem Störkreisabschnitt die Leiterbahnen (11) eine Breite (I) von 10 µm haben.

4. Sensor nach Anspruch 1, **dadurch gekennzeichnet, dass** in dem Störkreisabschnitt (13) die Leiterbahnen um einen Abstand (d) beabstandet sind, der kleiner 100 µm ist.

5. Sensor nach Anspruch 4, **dadurch gekennzeichnet, dass** in dem Störkreisabschnitt (13) die Bahnen um einen Abstand (d) zwischen 10 µm und 50 µm beabstandet sind.

6. Sensor nach Anspruch 5, **dadurch gekennzeichnet, dass** in dem Störkreisabschnitt (13) die Bahnen um einen Abstand (d) beabstandet sind, der gleich 40 µm ist.

## Claims

1. An inertial sensor including a piezoelectric plate (1) in which is defined a vibrating member (9) carrying excitation electrodes (10) connected to an excitation circuit including conductive tracks (11) carried by the piezoelectric plate, the excitation circuit including a disturbing circuit portion (13) in which two conductive tracks (11) extend alongside each other on either side of a median plane of a part (4, 6) of the plate undergoing deformation when the sensor is subjected to acceleration, **characterized in that** in the disturbing circuit portion (13) the conductive tracks (11) have a width (1) of less than 50 µm.

2. A sensor according to claim 1, **characterized in that** in the disturbing circuit portion (13) the conductive tracks (11) have a width (l) of between 5 µm and 20 µm.

3. A sensor according to claim 1, **characterized in that** in the disturbing circuit portion (13) the conductive tracks (11) have a width (l) of 10 µm.

4. A sensor according to claim 1, **characterized in that** in the disturbing circuit portion (13) the conductive tracks are spaced by a distance (d) less than 100 µm.

5. A sensor according to claim 4, **characterized in that** in the disturbing circuit portion (13) the tracks are spaced by a distance (d) between 10 µm and 50 µm.

6. A sensor according to claim 5, **characterized in that** in the disturbing circuit portion (13) the tracks are spaced by a distance (d) equal to 40 µm.
